# EUROPEAN PATENT SPECIFICATION

(11) **EP 4 043 722 B1**
(45) Date of publication and mention of the grant of the patent: **20.09.2023**
(21) Application number: 21157014.8
(22) Date of filing: 15.02.2021
(51) Int. Cl.: F03D 13/10, B60P 3/40, B66C 1/10, F03D 13/40

(54) **TRANSPORT SYSTEM AND METHOD OF TRANSPORTING A TOWER OF A WIND TURBINE**
TRANSPORTSYSTEM UND VERFAHREN ZUM TRANSPORT EINES TURMS EINER WINDTURBINE
SYSTÈME DE TRANSPORT ET PROCÉDÉ DE TRANSPORT D'UNE TOUR D'UNE ÉOLIENNE

(43) Date of publication of application: 17.08.2022
(73) Proprietor: Siemens Gamesa Renewable Energy A/S, 7330 Brande (DK)
(72) Inventor: FALKENBERG, Peter Loevenskjold, 7400 Herning (DK); KOMMA, Nagaraju, 7430 Ikast (DK); KUSCH, Gert, 8541 Skodstrup (DK); SOENDERUP, Joachim, 5230 Odense M (DK); POULSEN, Henning, Skjern (DK); LASHKOV, Ventsi, 8700 Horsens (DK)
(74) Representative: SGRE-Association

(56) References cited:
- EP-A1- 2 937 561
- EP-A1- 3 090 171
- WO-A2-2011/131254

## Description

The present invention relates to a tower of a wind turbine comprising a transport system for transporting said tower. The present invention further relates to a method of transporting a tower of a wind turbine using said transport system.

Wind turbines are increasingly used for the generation of electrical energy. A wind turbine typically comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor and rotates the shaft, thereby driving the generator to generate electricity.

Wind turbines are in continuous development due to advancements in technology and energy harvesting. Hence, new-generation wind turbines have increased in size compared to older ones. One of the components which has greatly increased in size is the tower, allowing the wind turbine to reach enough height above ground to provide clearance for the turbine blades at an altitude where there are high wind velocities for adequate power generation. This increased length of the tower of wind turbines complicates the transport of the tower from the manufacturing site to the storage facility or directly to the installation site.

For offshore wind turbines, where the wind energy is harvested offshore, the towers are transported in vessels. Huge, dedicated offshore wind turbine-installing vessels have been developed and built for the purpose. These huge vessels are very expensive to use and may be in low supply.

For onshore wind turbines, where the wind energy is harvested onshore, the towers are transported with trailers and trucks on the road. This requires the mobility of the transport system to be high to be able to transport the towers on sharp curves of the road or on uneven roads.

At present, there are different methods for transporting wind turbine towers. One method is to use a tower formed of a plurality of modules or sections which are assembled at the installation site. For this, the tower might comprise a plurality of tower sections to reduce the production and transportation costs, which are then transported separately to the installation site. This method simplifies the transport of the tower but results in a complicated assembly of the parts at the installation site, as accurate hoisting technology is required. Additionally, this method raises health and safety issues, as the workers work under suspended load, and the work time for the installation of the turbine increases. For the installation of offshore wind turbines and due to the harsh weather conditions in deep sea waters, the installation of the multiple modules or sections entails higher risks. On the one side, this leads to a higher weather exposure of the open parts during installation. On the other side, the complexity of this method increases the costs of installation due to the high costs of operation of the vessels used.

Document WO 2015/101375 A1 shows a method of transport of a plurality of tower sections. This document addresses the fact that new developments of wind turbines result in an increased size of wind turbines, complicating the transport of the components from the manufacturing site to the installation site. To solve this problem, the heavy components of the wind turbine are transported separately into sub-components. The document focuses on the transport of tower sections, which are then assembled at the installation site to form the tower. More specifically, the method consists of installing an interface device at each end of the tower section which is conceived for the transport and storage of the tower sections. However, this method requires to adapt each tower section for the coupling with the interface device and to assemble and disassemble an interface device for each tower end, which results in a longer installation time. For the case of offshore wind turbines, this greatly increases the costs of the wind turbine due to the high costs of operation of the vessels used. Additionally, the mobility of the trailers is limited, as the tower section is installed directly on the trailer, impeding the trailer to pivot while supporting the tower section.

Another method suited for tower transportation is to preassemble the tower and transport it to the installation site. Under preassembled tower it is meant a tower which is already assembled from a plurality of tower sections or similar components and which is transported as one piece, instead of transporting the tower sections or components separately or jointly as separate pieces. The tower can be preassembled at the manufacturing site and then be transported to the installation site. For the case of offshore wind turbines and to avoid the complexity of assembling multiple tower sections using a vessel in the installation site, the tower sections can also be preassembled at the harbor prior to sea transport on the vessel.

Methods used for tower section transport, such as the one disclosed in document WO 2015/101375 A1, are not suited to transport large and heavy towers as a preassembled tower or in a single piece due to the much higher weight and loads which have to be supported by the frames. Additionally, the frames suited for the transport of a preassembled tower are configured to be rigid so that the tower does not deform during the transport. Using frames conceived to transport tower sections for transporting a preassembled tower might result in an oval deformation of the tower ends, impeding the installation of the tower at the installation site.

For the transport of preassembled towers, other documents are known. The preassembled tower can be transported either vertically or horizontally.

By horizontal transport it is meant that the longitudinal axis of the tower of the wind turbine is transported substantially horizontally. EP 3 715 628 A1 discloses a ship that transports preassembled wind turbines in a horizontal arrangement.

Similarly, by vertical transport it is meant that the longitudinal axis of the tower of the wind turbine is transported substantially vertically. EP 2 641 825 A1 discloses a ship which transports preassembled wind turbines in a vertical arrangement and installs the wind turbines in the installation site by means of a handling device, which grips and lifts the tower of the wind turbine, moving the wind turbine to a position above the foundation.

Regarding further prior art, it is referred to the documents EP 2 937 561 A1 and WO 2011/131254 A2.

The methods and devices to transport towers of wind turbines known from the prior art are complex and require costly support structures and hoisting devices. Additionally, not all methods are suited for transporting completely preassembled towers.

It is therefore an object of the invention to provide an improved concept for transporting wind turbine towers.

This is achieved by tower according to claim 1 and a method of transporting a tower according to claim 11.

A transport system according to the invention for transporting a tower of a wind turbine comprises a frame coupled to a tower end of the tower, a wing coupled to the frame, and a lifting unit configured to lift the tower.

As wind turbine towers have two tower ends, the transport system can be coupled to any of the tower ends. One transport system can also be coupled to each of the tower ends.

An advantage of having a transport system comprising a plurality of components is the modular functionality of the single components. On the one side, the modularity of the transport system allows for easier coupling and decoupling of the single components of the transport system, and, therefore, the transport system can be easily removed from the tower once the transport is completed prior to installation of the wind turbine. The components can be reused for the transport of further towers. On the other side, the modular design allows for an easier adjustment of the components of the transport system to different wind turbine tower models, i.e. for towers with differing diameters. Hence, it is not necessary to redesign the complete transport system when used with another tower diameter.

The transport system is suited for horizontal tower transport. A preassembled tower can be transported in one piece from the manufacturing site to the installation site or to a storage facility by means of this transport system.

Additionally, the transport system can be suited for further purposes, such as the upending of the tower at the installation site. For the upending, further components can be attached to the transport system, such as a yoke configured to be lifted by a crane and an upending device for upending the tower. Thus, the modular design of the transport system allows for further uses of the transport system.

According to the invention, the lifting unit lifts the tower by pushing against the wing. After the lifting of the tower and during the transport, the tower is at least partially supported by the lifting unit. For this, one lifting unit is placed under each wing. For heavy towers, the tower might be additionally supported by further supports along its longitudinal axis to avoid a deformation of the tower during transport. Alternatively, the tower can be entirely supported by the lifting units if one transport system is coupled to each tower end.

According to a preferred embodiment of the invention, the lifting unit is mounted on a trailer before lifting the tower. This is particularly advantageous, as a trailer transport is a simple method to transport towers. Hence, the lifting unit can be easily driven to the manufacturing site or to the storage site to transport the tower. Additionally, when the transportation is completed, the lifting unit can be easily removed. The same lifting unit can be used to transport multiple towers.

Self-propelled modular transporters (SPMT) can be used as trailers. SPMTs are low-profile deck, multi-axle, self-propelled transporters, with independent suspension axle assemblies that are typically used to carry heavy loads. An SPMT can be electric powered and have six to twelve or more on-center rotation axle assemblies. The axles can be independently steered by varying each wheel motor speed and direction. The high mobility provided by SPMTs is particularly useful in sharp curves on local road transport, where a high accuracy is needed for turning the curve without damaging the tower.

According to the invention, the transport system further comprises a coupler unit. The coupler unit couples the frame to the tower end of the tower. If one transport system is coupled to each tower end, then one coupler unit can also be coupled to each tower end to couple the transport system to each tower end. An advantage of using a coupler unit is that the frame can be more easily fastened to the tower end.

According to the invention, the coupler unit is releasably connected to the tower end by means of a fastener. For this, the fasteners are inserted in both a first fastening hole of the tower end and a second fastening hole of the coupler unit to fasten the coupler unit to the tower end.

Under releasable connection is to be understood a connection between components which can be released without damage of the single components. This connection can be achieved by a semi-permanent joining method. For example, a bolt, screw, pin, rivet, thread, stud or other longitudinal piece can be used as the fastener of the components.

Preferably, pins are used for releasable connections of the transport system. By using pins, the components can be easily attached and afterwards detached when the transportation of the tower is completed prior to installation of the tower at the installation site. If the tower is to be upended using the transport system, then the transport system can be easily detached after upending the tower.

The releasable connection and the modularity of the transport device allows for a fast detachment of the components of the transport system when they are not needed anymore. Hence, after transport, the transport system can be completely detached from the tower. Hence, the same transport system can be used to transport multiple towers, as due to the releasable connection the transport system components are not damaged after detachment.

Alternatively, the frame is directly releasably connected to the tower end by fasteners, i.e. without using a coupler unit between the frame and the tower end. For this, the fasteners are inserted in both a first fastening hole of the tower end and a fourth fastening hole of the frame to fasten the frame to the tower end.

The tower ends have usually fastening holes for mounting the tower on the foundation, monopile or transition piece or for attaching the nacelle to the tower. Hence, these fastening holes can be further used as the first fastening holes to fasten the coupler unit to the tower end or to fasten the frame to the tower end.

Alternatively, if the fastening holes of the tower end are not suited to fasten the coupler units or the frame, the first fastening holes can be directly drilled at the tower end.

Alternatively, the coupler unit or the frame can be attached to the tower end by other releasable joining methods, such as a shape fit or a friction connection.

According to a preferred embodiment of the invention, the coupler unit comprises a bracket. The use of brackets is a cost-effective solution with which the frame can be easily coupled to the tower end.

According to another preferred embodiment of the invention, the coupler unit comprises a plurality of brackets distributed along the circumference of the tower end. This is advantageous for heavy towers, as the load to be supported by the coupler unit can be distributed on the plurality of brackets. Additionally, the use of brackets simplifies the attachment of the frame, as the frame can be attached to multiple points of the tower end and the brackets can be placed arbitrarily.

The use of brackets is a simple and cost-effective way to combine further components to the tower end, such as the frame. By using a plurality of brackets distributed along the circumference of the tower end, the same frame can be used for different towers with varying diameters at the tower ends. Thus, production costs are reduced by using the same frames for different wind turbine models, as only the brackets are to be adapted to the different diameters of the tower ends. Alternatively, by attaching the brackets at different positions depending on the diameter of the tower end, the same brackets can be used for different wind turbine models.

Additionally, by using brackets, further components can be attached to the coupler unit, such as the yoke used for the upending of the tower.

According to a preferred embodiment, the coupler unit is an integral part of the frame, which means that the frame and the coupler unit are formed as a single body. An integral connection can be achieved with permanent joining methods such as welding, which permanently join the surfaces of individual components together to create a single component which cannot be separated into the original individual components without considerable damage. An integral connection can also be achieved during the production of the frame. In this case, the casting mold comprises both the shape of the frame as well as the shape of the coupler unit. Thus, the casting of the frame produced already comprises the coupler unit.

According to the invention, the frame is releasably connected to the coupler unit by means of the fastener. Hence, the coupler unit is a separate part of the frame. In this case, the fastener can be a semi-permanent joining method, such as a bolt, rivet, screw or other known joining methods. For example, the coupler unit can be mounted on the frame by a nut-bolt connection.

According to another preferred embodiment of the invention, the bracket comprises a bracket tongue for coupling the bracket to the frame by means of a fastener. For this, the fastener is inserted in both a third fastening hole of the bracket tongue of the coupler unit and a fourth fastening hole of the frame to fasten the frame to the coupler unit.

According to a preferred embodiment, the wing is an integral part of the frame, which means that the frame and the wing are formed as a single body. An integral connection can be achieved with permanent joining methods such as welding, which permanently join the surfaces of individual components together to create a single component which cannot be separated into the original individual components without considerable damage. An integral connection can also be achieved during the production of the frame. In this case, the casting mold comprises both the shape of the frame as well as the shape of the wing. Thus, the casting of the frame produced already comprises the wing.

According to another preferred embodiment, the wing is releasably connected to the frame by means of the fastener. For this, the fasteners are inserted in both a sixth fastening hole of the wing and a fifth fastening hole of the frame to fasten the wing to the frame. The fasteners allow for a releasable connection of the frame with the wings, with the above-mentioned advantages.

According to another preferred embodiment of the invention, the wing is coupled to the frame by means of a locking profile. The locking profile comprises a locking element of the wing and a receptor element of the frame. Thus, the locking element of the wing is the male profile and the receptor element of the frame is the female profile, wherein the male and female profiles interlock in a closed locking element.

The locking element of the wing can be a protruding tab designed to mate with the receptor element of the frame, which can be designed as an aperture. This coupling method is easy to connect and can be easily released.

According to another preferred embodiment of the invention, the locking profile is secured from releasing by means of a stopper. The stopper is inserted below the locking profile in an insertion hole of the frame. Thus, through the stopper, the locking profile cannot vertically shift due to the weight of the wing and detach, so the closed locking profile is secured by the stopper. A pin can be used as a stopper and be inserted in the insertion hole of the frame.

According to another preferred embodiment of the invention, the wing is coupled to the frame by both fasteners and the locking profile, with the above-mentioned advantages of both methods.

The wings can be mounted and aligned for coupling for example by a forklift or a crane.

According to another preferred embodiment of the invention, the transport system further comprises a base configured to support the weight of the tower. This base is coupled to the lower part of the frame or forms an integral part of the lower part of the frame. This is particularly advantageous, as after the coupling of the frame, the tower can be entirely supported by the frames if at each tower end a frame is coupled to the tower end. Other supports used to support the tower so that the tower does not touch the ground and gets damaged can be removed. Particularly during the storage of preassembled towers, this is useful as the frames can support the weight of the tower in the storage facility, so space is gained which is otherwise taken by the tower supports.

Alternatively, for heavy towers which cannot be supported only at the ends, supports can be arranged along the length of the tower to avoid deformation of the tower under its own weight. In this case, the first and last supports can be removed, as the tower can be supported on its ends by the base of the transport systems attached to each tower end.

According to a preferred embodiment of the invention, the frame and/or the base are built using materials which can support the tower load without deforming, such as steel. This is particularly important, as the rigidity of the base and of the frames ensures that the tower ends will not deform to an oval shape during storage or transport, impeding the installation of the tower at the installation site.

According to another preferred embodiment of the invention, the base is an integral part of the frame. This results in a particularly rigid frame.

According to another preferred embodiment of the invention, the base is a separate part of the frame. This is particularly useful during upending of the tower, i.e. during the installation of the tower, where the base can be attached to the ground and the frame can be lifted from the ground by detaching itself from the base, when the frame is pulled up by a crane.

It is particularly advantageous if one tower end has a frame with an integral base and another tower end has a frame with a base which is a separate part of the frame. Then, during upending, the tower end with the separate base is lifted from the ground.

According to another preferred embodiment of the invention, the lifting unit comprises detachable legs configured to be placed on the lifting unit during transport. The use of detachable legs simplifies the support of the lifting unit, as during storage, the lifting unit is supported by the legs and during transport, the detachable legs are mounted on the lifting unit and the lifting unit is then supported on its base. This is advantageous, as the space needed during transport is reduced and the legs are secured on the lifting unit during transport, so they do not get lost.

According to another preferred embodiment of the invention, the lifting unit comprises an extendable lifting arm which is configured to push against the wing to lift the tower. The extendable lifting arm can be a hydraulic arm or a telescopic arm. The use of an extendable lifting arm allows to lift the tower off the ground and transport it, but also to reach a sufficient height above ground to avoid obstacles in the ground during the transport of the tower. Thus, for tower transport on local roads, by elevating the tower high enough, damage of the tower can be avoided in uneven roads or roads with bumps and holes. For the transport of the tower of an offshore wind turbine to the vessel, at low tides damage can be avoided by elevating the tower to a sufficient height above ground. At low tides, the height difference between the vessel and the harbor is high, so transporting the tower too low might result in the tower hitting the ground when the tower is transported on the ramp between the vessel and the harbor. Thus, a cylinder of the extendable lifting arm can be large enough to avoid that the belly of the tower collides against obstacles.

A further advantage of having a lifting arm is the loose connection between the wings and the lifting arm. This loose connection allows to transport the tower on uneven surfaces without transferring skew loads from the trailer to the tower.

According to another preferred embodiment of the invention, two wings are coupled to the frame. The use of two wings attached at the sides of the frame leaves the center space of the frame free for attachment of further components, such as the yoke used for upending of towers during installation of the wind turbine. Additionally, the weight of the tower is more equally balanced during the transport. Using two wings at each side of the frame for each transport system requires also the same number of lifting units, as one arm lifts one wing of the frame. Additionally, if separate trailers are used for each lifting unit, the mobility of the tower transport increases, simplifying the transport in difficult situations.

According to a preferred embodiment of the invention, the wings are demounted from the transport system during storage. This is particularly advantageous, as the protruding wings take a considerable amount of axial space. By removing the wings during storage, the towers can be stored closer together, gaining storage space.

According to a preferred embodiment of the invention, the wings are demounted on the vessel. This is particularly advantageous, as the protruding wings take a considerable amount of axial space. By removing the wings on the vessel before transporting them on the sea to the offshore installation site, more towers can be transported on the vessel with the gained axial space. Thus, the costs of vessel operation decrease as less trips are needed to the installation site.

According to a preferred embodiment of the invention, the width of the frame is chosen to fit between rails on the deck of a vessel for sea transport. The modular design of the transport system allows to use the same frame for towers with a different diameter, so the frame can be adapted to fit between the rails on the deck of a vessel to be able to easily secure the frame for sea transport. The fitting of the frame to the rails is also advantageous during upending, for example if the base is a separate part from the frame. The base is then fixed to the rails before sea transport and the frame can be detached from the base during upending at the installation site.

Yet another aspect of the present invention relates to a tower of a wind turbine comprising a transport system coupled to each of the tower ends. Thus, a transport system is coupled to a tower end of the tower and a further transport system is coupled to the other tower end of the tower. Each transport system coupled to the tower ends comprises a frame coupled to the tower end, a wing coupled to the frame, and a lifting unit configured to lift the tower. The weight can be more equally balanced and the rigidity of the transportation increased if one transport system is coupled to each end of the tower.

Another aspect of the invention relates to a method of transporting a tower of a wind turbine, wherein the tower comprises a transport system coupled to each end of the tower. The method comprises the steps of coupling a frame to each tower end, coupling a wing to each frame, pushing against the wing of each frame with the lifting unit to lift the tower off the ground, and transporting the tower.

If the transport system further comprises a coupler unit, then, before coupling the frame to each tower end, the coupler unit is fastened to each tower end. Then, the frame is fastened to the coupler unit of each tower end and, thus, coupled to the tower end.

In order to facilitate the understanding of the characteristics of the invention and being an integral part of this specification, some drawing sheets are attached on which figures, with an illustrative but not limiting character, the following is represented:
Figures 1 to 4 show the process of coupling a transport system according to an embodiment of the invention.
Figures 5 and 6 show the mounting and transport of a lifting unit on a trailer.
Figure 7 shows a transport system according to an embodiment of the invention coupled to a tower end and the lifting of the tower by means of the lifting unit and the transport system.
Figure 8 shows a transport system according to another embodiment of the invention coupled to a tower end and the lifting of the tower by means of the lifting unit and the transport system.
Figure 9 shows the coupling of a coupler unit according to another embodiment of the invention to a tower end of the tower.
Figure 10 shows the coupling of a yoke to a transport system according to an embodiment of the invention.
Figure 11 shows a tower with a transport system according to one embodiment of the invention coupled to a tower end and a transport system according to another embodiment of the invention coupled to the other tower end.
Figure 12 shows the transport of a tower to a storage facility.
Figure 13 shows the transport of a tower on a vessel.

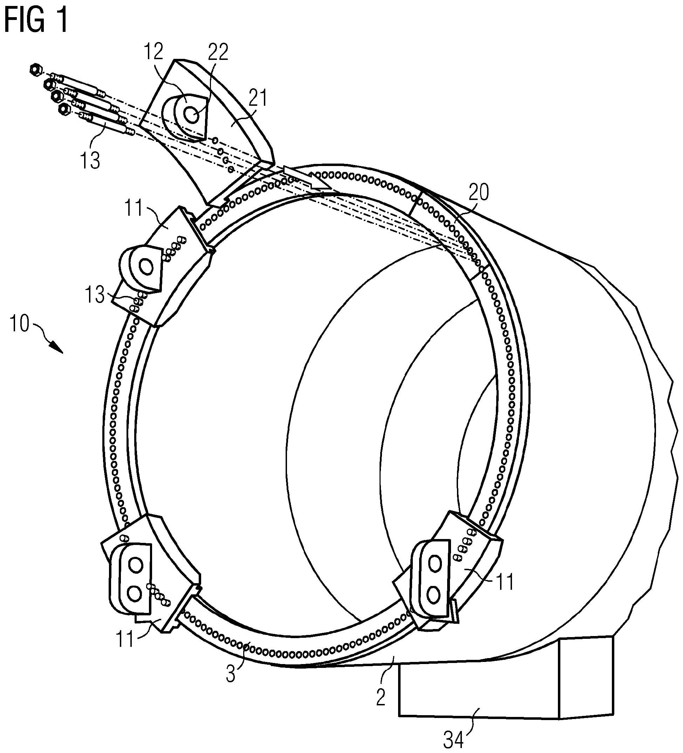

Figures 1 to 4 show the coupling of a transport system 1 to a tower end 3 of a tower 2 of a wind turbine. The transport system 1 shown in these figures comprises a coupler unit 10, a frame 5 being coupled through the coupler unit 10 to the tower end 3 and two wings 6 attached to the frame 5. During the coupling of the transport system 1, the tower 2 stands on a support 34 to avoid direct contact of the tower 2 with the ground, thus preventing a possible damage of the tower 2 during the installation and simplifying the attachment of the transport system 1. When the frame 5 is installed, its base 7 can serve as a tower-support and the support 34 can be removed.

Figure 1 shows the attachment of the coupler unit 10 to the tower end 3. The tower end 3 comprises a plurality of first fastening holes 20, which could be the fastening holes used to attach the tower to the foundation or the transition piece or to attach the nacelle to the tower. The first fastening holes 20 are used to couple the coupler unit 10 to the tower end 3. For this, fasteners 13 are inserted in both the first fastening holes 20 of the tower end 3 and second fastening holes 21 of the coupler unit 10.

In this embodiment shown, the coupler unit 10 comprises four brackets 11 distributed along the circumference of the tower end 3, each of the brackets comprising a plurality of second fastening holes 21 which are fastened by fasteners 13. The fasteners 13 in this example are bolts, which can be screwed to an inner thread of the first fastening holes 20 and are then fastened with a nut. However, other fastening means can be used.

By using releasable fasteners 13 such as a nut-bolt connection, the brackets 11 and, thus, the complete transport system 1 can be releasably connected to the tower 2. This releasable connection has the advantage that the transport system 1 can be removed during the installation step of the wind turbine, as the transport system 1 is not needed during operation of the wind turbine.

Each bracket 11 of the coupler unit 10 further comprises a bracket tongue 12 configured to be coupled to the frame 5. For this, the bracket tongue 12 has third fastening holes 22 configured to be fastened by fasteners 13. Depending on the size and weight to be supported by the transport system 1, the bracket tongues 12 of a coupler unit 10 can have different sizes. Alternatively, each bracket 11 can comprise more than one bracket tongue 12. Alternatively, each bracket 11 can comprise a plurality of third fastening holes 22.

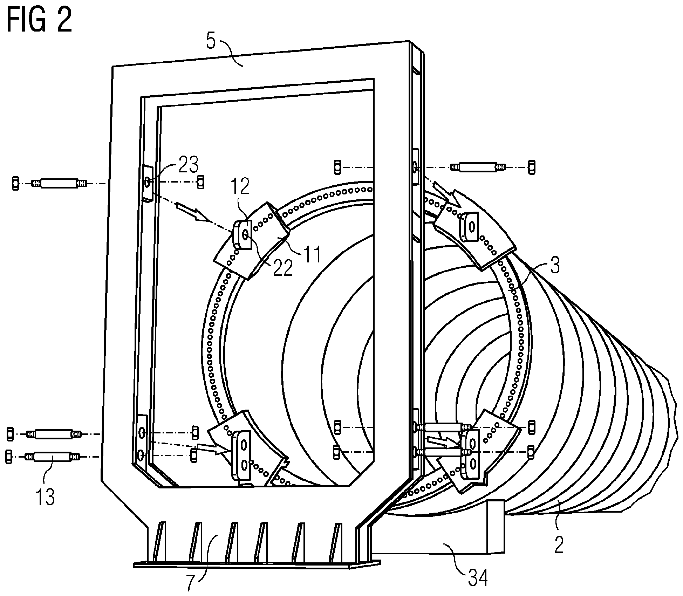

In Figure 2, the frame 5 is attached to the tower end 3 of the tower 2 by fastening the frame 5 to the coupler unit 10, the coupler unit 10 being already fastened to the tower end 3. For this, the frame 5 comprises a plurality of fourth fastening holes 23 corresponding to the third fastening holes 22 of the bracket tongues 12 of the coupler unit 10. Fasteners 13 are inserted in both the fourth fastening holes 23 of the frame 5 and the third fastening holes 22 of the brackets 11 to couple the frame 5 to each bracket 11 and, thus, to couple the frame 5 to the tower end 3 of the tower 2. As the lower brackets 11 support a higher load due to the weight of the tower 2, they both comprise two third fastening holes 22 at each bracket tongue 12. Hence, the frame 5 comprises at is lower part two fourth fastening holes 23 at each side configured to be inserted by fasteners 13 and coupled to the corresponding third fastening holes 22 of the coupler unit 10.

Once the frame 5 is attached to the tower end 3, the tower 2 can be supported by the frame 5. For this, the frame 5 of the transport system 1 has a base 7 which is formed as an integral part of the frame 5, which means that the frame 5 and the base 7 are formed as a single body.

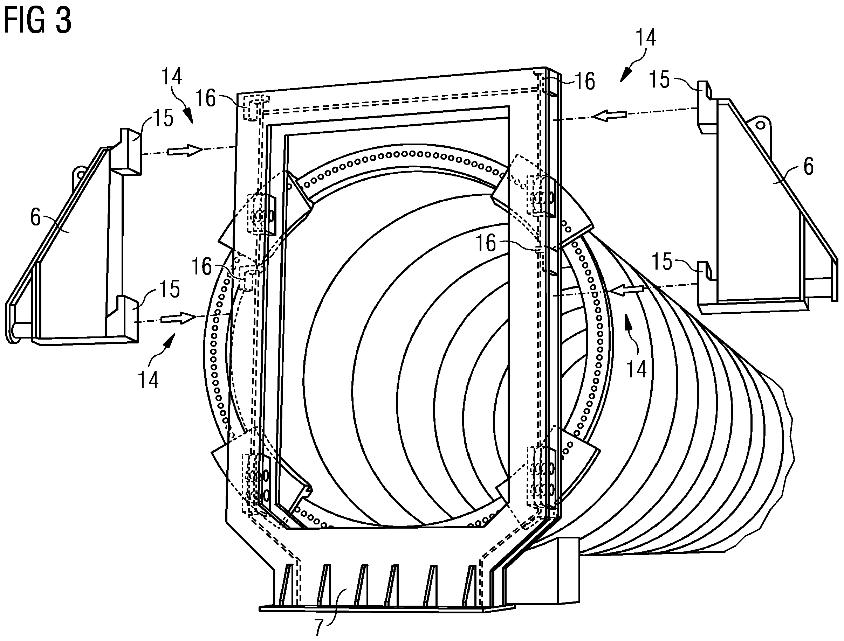

Figure 3 shows the next step of the attachment of the transport system 1. In this embodiment, two wings 6 are coupled to the frame 5 at each side of the frame 5. Each wing 6 has two locking profiles 14, which are configured to be coupled to a complementary locking profile 14 of the frame 5. Hence, the wings 6 and the frame 5 can be locked together via said profiling, wherein the locking is achieved by shifting a locking element 15 of the locking profiles 14 of the wings 6 in a receptor element 16 of the locking profiles 14 of the frame 5. The locking element 15 is a protruding tab designed to mate with the receptor element 16, which is designed as an aperture. The locking is achieved by first shifting the wings 6 horizontally towards the edge of the frame 5 until the locking elements 15 of the wings 6 are horizontally aligned with the receptor elements 16 of the frame 5, and subsequently by shifting the wings 6 vertically so that the locking elements 15 are locked in the receptor elements 16.

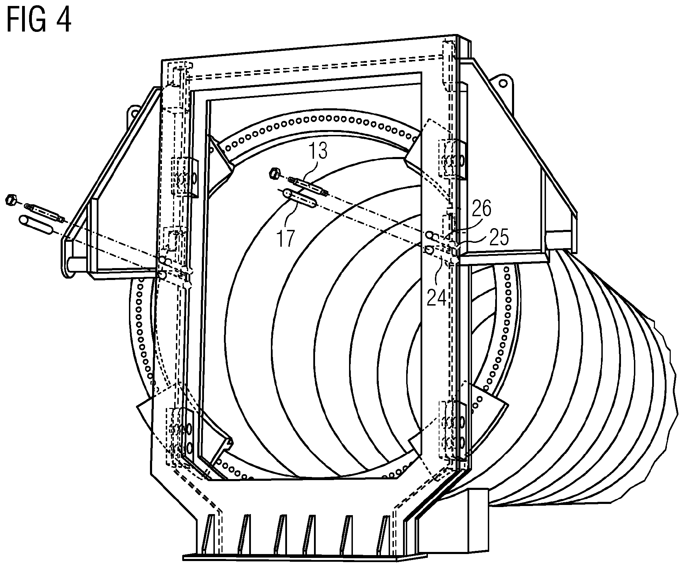

Figure 4 shows the last step of the attachment of the transport system 1. Here, the wings 6 are secured by stoppers 17, so that the locking profiles 14 of both the wings 6 and the frame 5 do not detach. The stoppers 17, in this case configured as pins, are inserted in insertion holes 24 bored at the frame 5 below each wing 6. The stoppers 17 prevent the wings 6 to vertically shift down and therefore the locking elements 15 of the wings 6 to detach from the receptor elements 16 of the frame 5.

Additionally, the wings have each one sixth fastening hole 26 corresponding to a fifth fastening hole 25 of the frame 5 to further secure and fasten the wings 6 to the frame 5 by means of a fastener 13, inserted in the sixth fastening hole 26 and the fifth fastening hole 25. This is an additional measure to secure that the locking profiles 14 do not detach during transport.

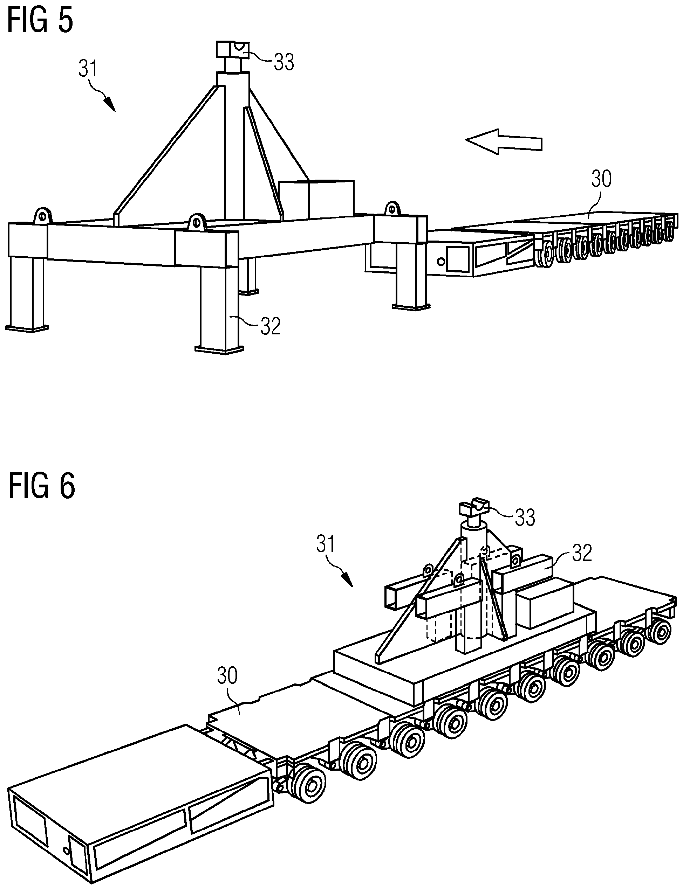

Figure 5 shows a lifting unit 31 which is used to lift the tower 2 of the wind turbine for transport. The lifting unit 31 comprises detachable lifting unit legs 32 for easily mounting the lifting unit 31 on a trailer 30 and to reduce the space needed on the trailer 30. The lifting unit 31 further comprises a lifting unit arm 33 which is extendable in order to lift the tower 2.

The lifting unit 31 is mounted on the lifting unit legs 32 to easily shift the trailer 30 under the lifting unit 31 and mount the lifting unit 31 on the trailer 30. The trailer 30 shown here is a 10 axle SPMT.

Once the lifting unit 31 is mounted on the trailer 30, the lifting unit legs 32 can be detached and secured on the lifting unit 31 for the transport, as shown in Figure 6.

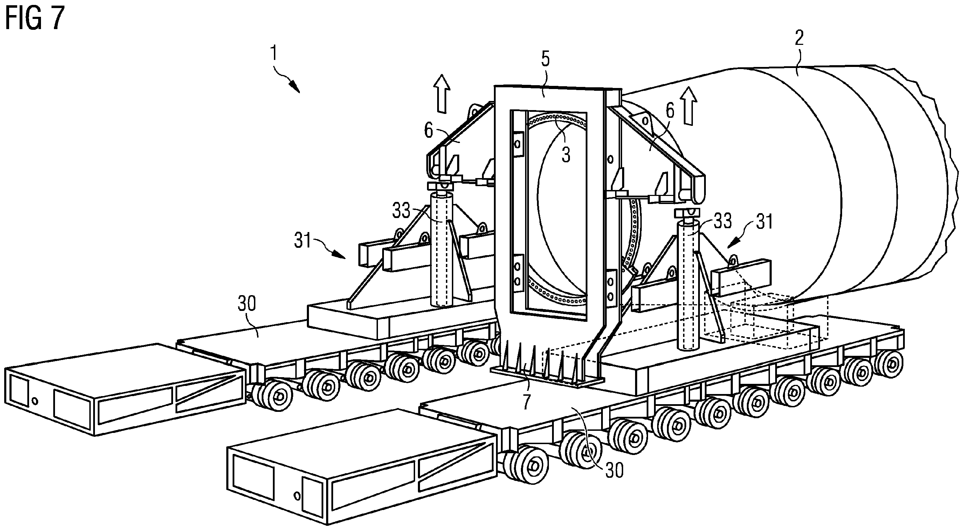

Figure 7 shows the alignment of the lifting unit 31 under the wing 6 in order to lift the tower 2. For each wing 6, a lifting unit 31 is used. The lifting unit arms 33 are placed under each wing and extended, so that the tower 2 is lifted. The extension of the lifting unit arms 33 can be done using hydraulics.

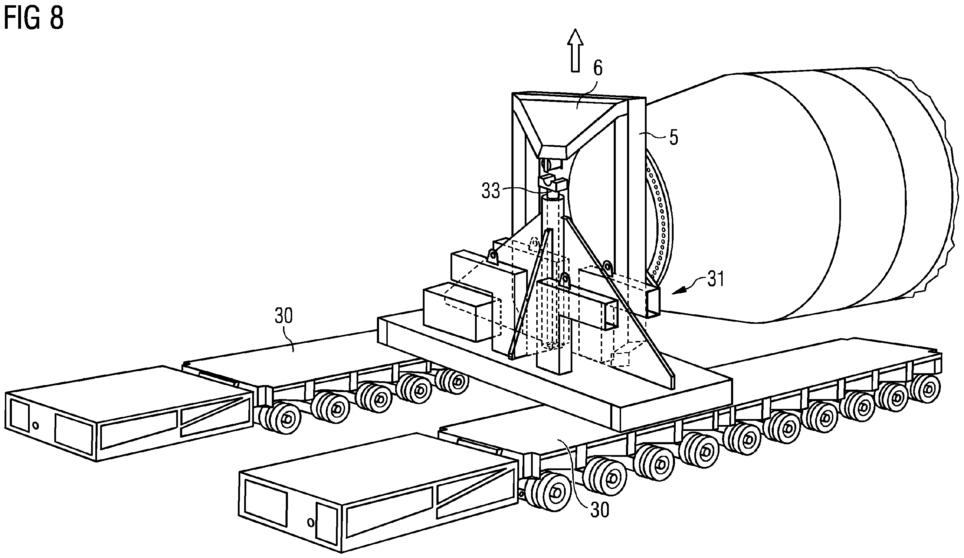

Figure 8 shows an alternative embodiment of the transport system 1 with a single wing 6. In this case, only one lifting unit 31 is used at this tower end 3 in order to lift the tower 2. The lifting unit 31 is in this case standing on two trailers 30, however it is also possible to use a single trailer 30 for the lifting unit 31.

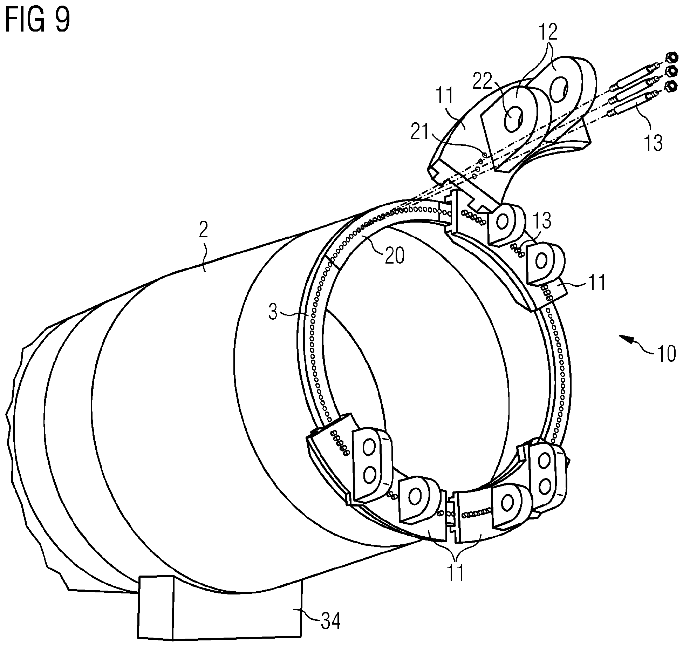

Figure 9 shows the coupling of a coupler unit 10 according to another embodiment of the invention to a tower end 3 of the tower 2 of a wind turbine. The tower end 3 comprises a plurality of first fastening holes 20, which are used to couple the coupler unit 10 to the tower end 3. For this, fasteners 13 are inserted in both the first fastening holes 20 of the tower end 3 and second fastening holes 21 of the coupler unit 10.

In this embodiment shown, the coupler unit 10 comprises four brackets 11 distributed along the circumference of the tower end 3, each of the brackets comprising a plurality of second fastening holes 21 which are fastened by fasteners 13. The fasteners 13 in this example are bolts, which can be screwed to an inner thread of the first fastening holes 20 and are then fastened with a nut. However, other fastening means can be used.

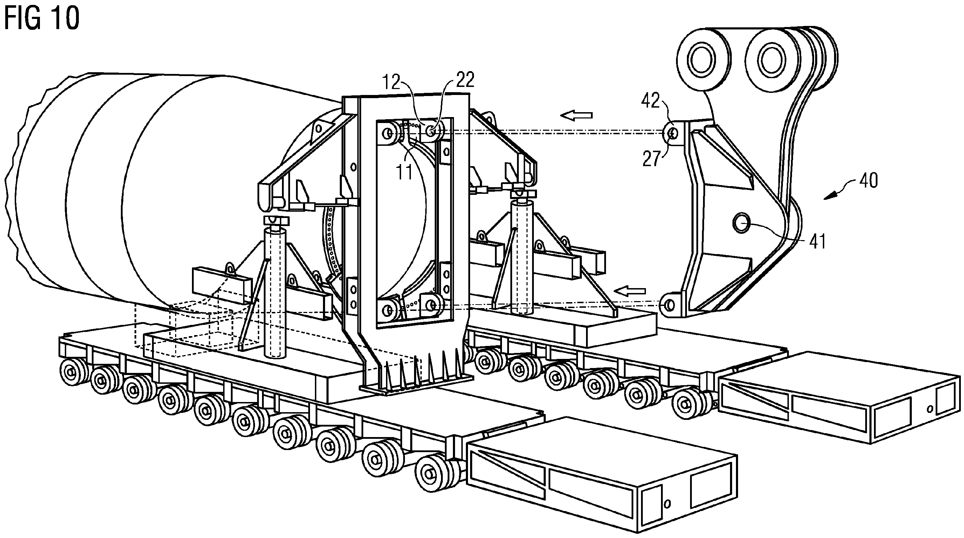

Each bracket 11 of the coupler unit 10 further comprises two bracket tongues 12. The outer bracket tongue 12 of each bracket 11 is configured to be coupled to the frame 5, as seen in Figure 10. The inner bracket tongue 12 of each bracket 11 is configured to be coupled to a yoke 40, which is used for the upending of the tower 2. Due to the modular design of the transport system 1, the transport system 1 can be used for further purposes, as shown here. To attach the frame 5 to the bracket 11 as seen in Figure 10, the bracket tongue 12 has third fastening holes 22 configured to be fastened by fasteners 13.

As shown in Figure 10, once the frame 5 is attached to the tower end 3, the tower 2 can be supported by the frame 5. For this, the frame 5 in this embodiment of the transport system 1 has a base 7 which is formed as a separate part of the frame 5, which means that the frame 5 and the base 7 are separate pieces connected by a releasable joining method, such as a pin, a screw, a shape fit or a friction connection. This is particularly useful during upending of the tower 2, i.e. during the installation of the tower 2, where the base 7 can be attached to the ground and the frame 5 can be lifted from the ground by detaching itself from the base 7, when the frame 5 is pulled up by a crane. After coupling the frame 5 to the coupler unit 10, two wings 6 are coupled to the frame 5 at each side of the frame 5.

As shown in Figure 10, a yoke 40 can be coupled to the inner bracket tongues 12 of the coupler unit 10 of the transport system 1. For this, the yoke 40 has yoke tongues 42 with eighth fastening holes 27 configured to be attached to the third fastening holes 22 of the bracket tongues 12 by means of fasteners 13. The yoke 40 comprises further a lifting trunnion 41 for the balance of the weight and for the rotation of the yoke 40.

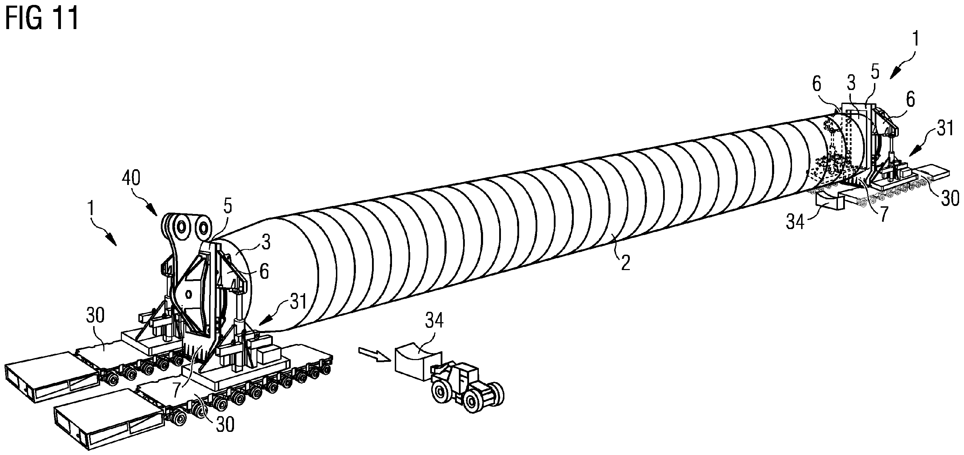

Figure 11 shows a tower 2 with a transport system 1 according to one embodiment of the invention coupled to a tower end 3 and a transport system 1 according to another embodiment of the invention coupled to the other tower end 2. At one tower end 3, the transport system 1 is configured as the embodiment shown in Figures 1 to 4, with a coupler unit 10, a frame 5 with an integral base 7 and two side wings 6. At the other tower end 3, the transport system 1 is configured as the embodiment shown in Figures 9 and 10, with a coupler unit 10, a frame 5 with a detachable base 7 as a separate part of the frame 5, two side wings 6 and a yoke 40. This configuration is advantageous for upending the tower 2, where an upending device 50 is attached to one tower end 3 configured to rotate the tower 2 while the crane lifts the yoke 40 attached to the other tower end 3.

For each wing 6 of each transport system 1, a separate lifting unit 31 is placed under the wing 6 and a separate lifting unit arm 33 of each lifting unit 31 extends and pushes the wing 6 upwards to lift the tower 2. In this case, each transport system 1 has two wings 6, so there are four wings 6 in total. Thus, there are also four lifting units 31, placed on four trailers 30. When the tower 2 is lifted, the supports 34 can be removed, as the tower 2 is supported by the lifting units 31 on the trailers 30.

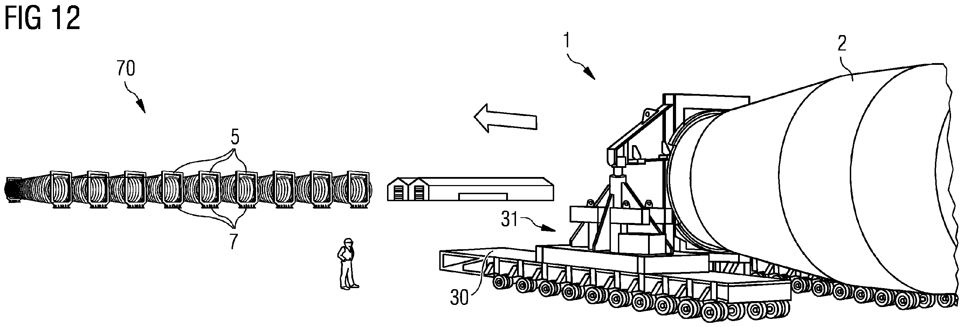

Figure 12 shows the transport of the tower 2 using the transport system 1. The tower 2 was lifted using the methods described above and is then transported with the trailers 30. The trailers 30 are SPMT. Four 10 axle SPMT's are used, one in each corner, where in Figure 12 only two trailers 30 are shown. A load spreading structure is made for each SPMT, which also allows the SPMT to rotate slightly when driving on uneven terrain.

In this figure, the tower 2 is transported to a storage facility 70 and then stored there. Due to the modular design of the transport system 1, the wings 6 can be removed of the tower 2 in the storage facility 70 to reduce the space needed to store the tower 2. When the tower 2 is transported again, the wings 6 can be reattached to the transport system 1.

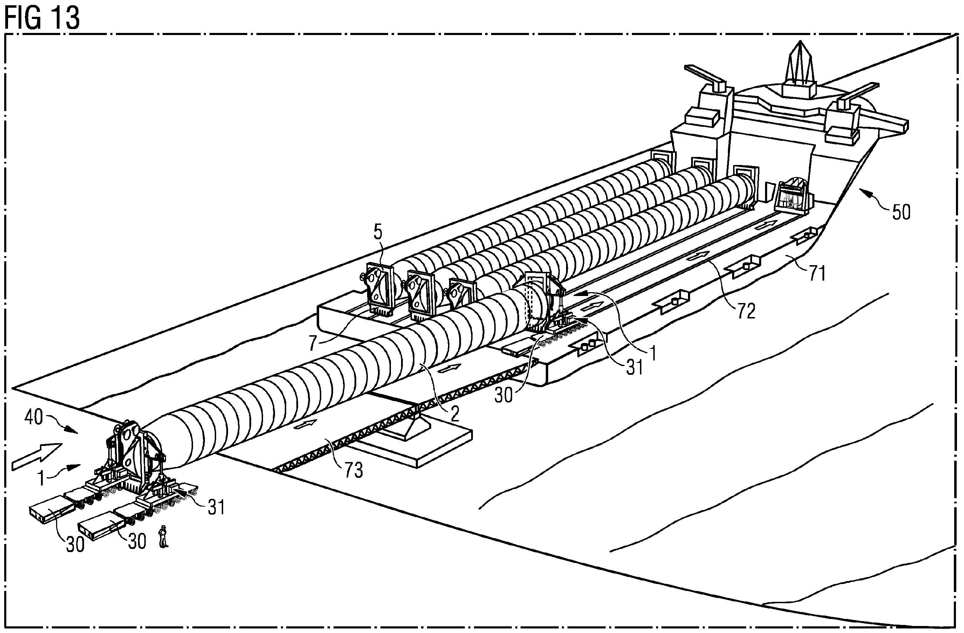

Figure 13 shows the loading of a vessel 71 with towers 2 for the installation of offshore wind turbines. The towers are transported with four 10-axle SPMT as trailers 30. A ramp 73 with a platform is used to load the towers 2. The platform can be a floating platform or a static platform, which is raised and lowered following the tide. Additionally, the lifting unit 31 can lift the tower 2 at each end of the tower 3 to a sufficient height to avoid that the tower 2 hits the ground when it is loaded on the ramp 73 to the vessel 71. For example, it avoids a collision against the ground at low tides, where the height difference between the vessel 71 and the harbor is high. The upending devices 50 used for upending the tower 2 at the installation site are also shown in this figure.

### Reference list

- 1: Transport system
- 2: Tower
- 3: Tower end
- 5: Frame
- 6: Wing
- 7: Base
- 10: Coupler unit
- 11: Bracket
- 12: Bracket tongue
- 13: Fastener
- 14: Locking profile
- 15: Locking element
- 16: Receptor element
- 17: Stopper
- 20: First fastening hole
- 21: Second fastening hole
- 22: Third fastening hole
- 23: Fourth fastening hole
- 24: Insertion hole
- 25: Fifth fastening hole
- 26: Sixth fastening hole
- 27: Eighth fastening hole
- 30: Trailer
- 31: Lifting unit
- 32: Lifting unit leg
- 33: Lifting unit arm
- 34: Support
- 40: Yoke
- 41: Lifting trunnion
- 42: Yoke tongue
- 50: Upending device
- 70: Storage facility
- 71: Vessel
- 72: Rails
- 73: Ramp

## Claims

1. A tower (2) of a wind turbine comprising a transport system (1) for transporting said tower (2), said transport system (1) comprising:
- a frame (5) coupled to a tower end (3) of the tower (2) ,
- a wing (6) coupled to the frame (5),
- a lifting unit (31) configured to lift the tower (2), and
- a coupler unit (10) to couple the frame (5) to the tower end (3),
wherein the lifting unit (31) lifts the tower (2) by pushing against the wing (6), wherein the tower (2) is at least partially supported by the lifting unit (31) during transport,
wherein the coupler unit (10) is releasably connected to the tower end (3) by means of a fastener (13),
wherein the frame (5) is releasably connected to the coupler unit (10) by means of the fastener (13).

2. The tower (2) according to claim 1, **characterized in that** the coupler unit (10) comprises a plurality of brackets (11) distributed along the circumference of the tower end (3).

3. The tower (2) according to any of the preceding claims, **characterized in that** the wing (6) is releasably connected to the frame (5) by means of the fastener (13) .

4. The tower (2) according to any of the preceding claims, **characterized in that** the wing (6) is releasably connected to the frame (5) by means of a locking profile (14).

5. The tower (2) according to any of the preceding claims, **characterized in that** said transport system (1) further comprises a base (7) configured to support the weight of the tower (2).

6. The tower (2) according to claim 5, **characterized in that** the base (7) is an integral part of the frame (5).

7. The tower (2) according to claim 5, **characterized in that** the base (7) is a separate part of the frame (5).

8. The tower (2) according to any of the preceding claims, **characterized in that** the lifting unit (31) comprises detachable legs (32) configured to be placed on the lifting unit (21) during transport.

9. The tower (2) according to any of the preceding claims, **characterized in that** the lifting unit (31) comprises an extendable lifting arm (33) configured to push against the wing (6) to lift the tower (2).

10. The tower (2) according to any of the preceding claims, **characterized in that** two wings (6) are coupled to the frame (5).

11. A method of transporting a tower (2) of a wind turbine according to any of the preceding claims, comprising the steps of:
- coupling a frame (5) to each tower end (3),
- coupling a wing (6) to each frame (5),
- pushing against the wing (6) of each frame (5) with the lifting unit (31) to lift the tower (2) off the ground, and
- transporting the tower (2).

## Patentansprüche

1. Turm (2) einer Windturbine, umfassend ein Transportsystem (1) zum Transportieren des Turms (2), wobei das Transportsystem (1) Folgendes umfasst:
- einen Rahmen (5), der mit einem Turmende (3) des Turms (2) gekoppelt ist,
- einen Flügel (6), der mit dem Rahmen (5) gekoppelt ist,
- eine Hebeeinheit (31), die dazu konfiguriert ist, den Turm (2) anzuheben, und
- eine Kopplungseinheit (10) zum Koppeln des Rahmens (5) mit dem Turmende (3),
wobei die Hebeeinheit (31) den Turm (2) durch Drücken gegen den Flügel (6) anhebt, wobei der Turm (2) während des Transports zumindest teilweise durch die Hebeeinheit (31) gestützt wird,
wobei die Kopplungseinheit (10) mittels eines Befestigungselements (13) lösbar mit dem Turmende (3) verbunden ist,
wobei der Rahmen (5) mittels des Befestigungselements (13) lösbar mit der Kopplungseinheit (10) verbunden ist.

2. Turm (2) nach Anspruch 1, **dadurch gekennzeichnet, dass** die Kopplungseinheit (10) mehrere Halter (11) umfasst, die über den Umfang des Turmendes (3) verteilt sind.

3. Turm (2) nach einem der vorhergehenden Ansprüche, **dadurch gekennzeichnet, dass** der Flügel (6) mittels des Befestigungselements (13) lösbar mit dem Rahmen (5) verbunden ist.

4. Turm (2) nach einem der vorhergehenden Ansprüche, **dadurch gekennzeichnet, dass** der Flügel (6) mittels eines Verriegelungsprofils (14) lösbar mit dem Rahmen (5) verbunden ist.

5. Turm (2) nach einem der vorhergehenden Ansprüche, **dadurch gekennzeichnet, dass** das Transportsystem (1) ferner eine Basis (7) umfasst, die dazu konfiguriert ist, das Gewicht des Turms (2) zu stützen.

6. Turm (2) nach Anspruch 5, **dadurch gekennzeichnet, dass** die Basis (7) ein integraler Teil des Rahmens (5) ist.

7. Turm (2) nach Anspruch 5, **dadurch gekennzeichnet, dass** die Basis (7) ein getrennter Teil des Rahmens (5) ist.

8. Turm (2) nach einem der vorhergehenden Ansprüche, **dadurch gekennzeichnet, dass** die Hebeeinheit (31) abnehmbare Beine (32) umfasst, die dazu konfiguriert sind, während des Transports auf der Hebeeinheit (21) platziert zu werden.

9. Turm (2) nach einem der vorhergehenden Ansprüche, **dadurch gekennzeichnet, dass** die Hebeeinheit (31) einen ausziehbaren Hebearm (33) umfasst, der dazu konfiguriert ist, gegen den Flügel (6) zu drücken, um den Turm (2) anzuheben.

10. Turm (2) nach einem der vorhergehenden Ansprüche, **dadurch gekennzeichnet, dass** die beiden Flügel (6) mit dem Rahmen (5) gekoppelt sind.

11. Verfahren zum Transportieren eines Turms (2) einer Windturbine nach einem der vorhergehenden Ansprüche, das die folgenden Schritte umfasst:
- Koppeln eines Rahmens (5) mit jedem Turmende (3),
- Koppeln eines Flügels (6) mit jedem Rahmen (5),
- Drücken gegen den Flügel (6) jedes Rahmens (5) mit der Hebeeinheit (31), um den Turm (2) vom Boden abzuheben, und
- Transportieren des Turms (2).

## Revendications

1. Tour (2) d'une turbine éolienne comprenant un système de transport (1) destiné au transport de ladite tour (2), ledit système de transport (1) comprenant :
- un châssis (5) couplé à une extrémité de tour (3) de la tour (2),
- une aile (6) couplée au châssis (5),
- une unité de levage (31) configurée de façon à lever la tour (2), et
- une unité de couplage (10) destinée à coupler le châssis (5) à l'extrémité de tour (3),
dans laquelle l'unité de levage (31) soulève la tour (2) en la poussant contre l'aile (6), la tour (2) étant au moins partiellement soutenue par l'unité de levage (31) au cours du transport,
dans laquelle l'unité de couplage (10) est raccordée de manière libérable à l'extrémité de tour (3) au moyen d'un élément de fixation (13),
dans laquelle le châssis (5) est raccordé de manière libérable à l'unité de couplage (10) au moyen de l'élément de fixation (13).

2. Tour (2) selon la revendication 1, **caractérisée en ce que** l'unité de couplage (10) comprend une pluralité de supports (11) distribués le long de la circonférence de l'extrémité de tour (3).

3. Tour (2) selon l'une quelconque des revendications précédentes, **caractérisée en ce que** l'aile (6) est raccordée de manière libérable au châssis (5) au moyen de l'élément de fixation (13).

4. Tour (2) selon l'une quelconque des revendications précédentes, **caractérisée en ce que** l'aile (6) est raccordée de manière libérable au châssis (5) au moyen d'un profil de verrouillage (14).

5. Tour (2) selon l'une quelconque des revendications précédentes, **caractérisée en ce que** ledit système de transport (1) comprend en outre une base (7) configurée de façon à supporter le poids de la tour (2).

6. Tour (2) selon la revendication 5, **caractérisée en ce que** la base (7) est une partie d'un seul tenant du châssis (5).

7. Tour (2) selon la revendication 5, **caractérisée en ce que** la base (7) est une partie distincte du châssis (5).

8. Tour (2) selon l'une quelconque des revendications précédentes, **caractérisée en ce que** l'unité de levage (31) comprend des pieds détachables (32) configurés de façon à être placés sur l'unité de levage (21) au cours du transport.

9. Tour (2) selon l'une quelconque des revendications précédentes, **caractérisée en ce que** l'unité de levage (31) comprend un bras de levage extensible (33) configuré de façon à pousser contre l'aile (6) de façon à lever la tour (2) .

10. Tour (2) selon l'une quelconque des revendications précédentes, **caractérisée en ce que** deux ailes (6) sont couplées au châssis (5).

11. Procédé de transport d'une tour (2) d'une turbine éolienne selon l'une quelconque des revendications précédentes, comprenant les étapes suivantes :
- le couplage d'un châssis (5) à chaque extrémité de tour (3),
- le couplage d'une aile (6) à chaque châssis (5),
- une poussée contre l'aile (6) de chaque châssis (5) avec l'unité de levage (31) de façon à soulever la tour (2) du sol, et
- le transport de la tour (2).
